# EUROPÄISCHE PATENTSCHRIFT

(11) **EP 2 562 483 B1**
(45) Veröffentlichungstag und Bekanntmachung des Hinweises auf die Patenterteilung: **24.10.2018**
(21) Anmeldenummer: 12181203.6
(22) Anmeldetag: 21.08.2012
(51) Int. Cl.: F24C 15/20, B01D 46/00, B01J 20/12, B01J 20/20, B01D 53/04, B01J 20/28, B01D 53/86

(54) **DUNSTABZUGSVORRICHTUNG**
STEAM EXTRACTOR DEVICE
DISPOSITIF FORMANT HOTTE ASPIRANTE

(30) Priorität: 22.08.2011 DE 102011081300
(43) Veröffentlichungstag der Anmeldung: 27.02.2013
(73) Patentinhaber: BSH Hausgeräte GmbH, 81739 München (DE)
(72) Erfinder: Eich, Holger, 76287 Rheinstetten (DE); Metz, Daniel, 76689 Karlsdorf-Neuthard (DE); Schnatz, Martina, 75015 Bretten (DE)

(56) Entgegenhaltungen:
- EP-A2- 0 074 063
- EP-A2- 2 006 009
- WO-A2-2011/019729
- DE-A1- 19 849 389
- DE-A1- 19 950 980
- DE-A1-102009 044 675
- JP-A- 2002 081 657
- JP-A- 2005 305 268
- JP-A- 2009 213 759
- US-A- 3 925 248

## Beschreibung

Die vorliegende Erfindung betrifft eine Dunstabzugsvorrichtung, die eine Dunstabzugshaube umfasst mit mindestens einem Filterelement.

Dunstabzugshauben sollen unter anderem Gerüche aus dem Kochwrasen beseitigen. Üblicherweise werden zu diesem Zweck Aktivkohlefilter eingesetzt. Aktivkohle ist als breitbandiges Adsorptionsmittel bekannt. Viele Gerüche und auch Wasser werden von Aktivkohlefiltern gut adsorbiert. Allerdings ist es aufgrund der Natur von Aktivkohle nicht oder nur schwer möglich einzelne Gerüche gezielt zu adsorbieren und die Adsorptionsvorgänge in dem Filterelement gezielt einzustellen.

Zudem ist in der EP 0 074 063 A2 ein sorptiv wirkender Körper, insbesondere zur Geruchsbeseitigung, zur Raumbeduftung und dergleichen beschrieben. Dieser Körper kann als Geruchsfilter bei Küchendunstabzugshauben verwendet werden. Bei dem Körper wird auf einen Träger eine Oberflächenbeschichtung aufgebracht oder der Träger getränkt. Die Materialien des Trägers sind beispielsweise synthetische Schaumstoffe, Vliesstoffe und dergleichen. Für das Sorptionsmittel, das in der Beschichtung enthalten ist, ist beispielsweise Aktivkohle angeben als weiteres Beispiel ist Bentonit genannt. Für Filtereinsätze bei Küchendunstfiltern wird hierbei als Sorptionsmittel ausschließlich Aktivkohle verwendet. Auch mit diesem sorptiv wirkenden Körper ist es daher nicht möglich Gerüche gezielt zu adsorbieren.

Weiterhin ist in der EP 2 006 009 A2 ein Filter beschrieben, der aus einem mehrlagigen Filtermedium besteht, das mindestens eine Stützvliesschicht, mindestens eine Filterschicht und mindestens eine Deckschicht und gegebenenfalls mindestens eine Mikrofaser-Vliesschicht aufweist. Dieser Filter ist nicht zur Benutzung für eine Dunstabzugshaube beschrieben. Die Schichten des Filters können aus Glasfasern und/oder Mineralfasern bestehen.

Weiterhin ist in der US 3,925,248 A ein Filtermedium für Gase beschrieben. Hierbei wird Aktivkohle in ein Schaustoffmittel eingebunden. Der so mit Aktivkohle versetzte Schaumstoff wird zwischen zwei Vlieslagen gehalten und mit diesen vernäht. Als Sorptionsmittel kann auch beispielsweise Bentonit verwendet werden, das in den Schaumstoff integriert ist.

Des Weiteren offenbart WO 2011/019729 A2 eine Dunstabzugsvorrichtung mit einer Filtereinheit, wobei die Filtereinheit Filtermaterial aufweist, welches Aktivkohle, sowie weitere mineralische Adsorber aufweist.

Schließlich offenbart DE 198 49 389 A1 ein regenerierbares Filtermedium mit hoher Spontanität und hoher Kapazität beschrieben. Dieses Filtermedium besteht aus einer Basisschicht aus aktivierten Kohlefasergewebe oder -gewirke. Auf diese Basisschicht ist eine Schicht aus Adsorberpartikeln angeordnet, die mit einem Bindemittel an der Basisschicht befestigt sind. Das Filtermedium ist insbesondere für Geruchsfiltersysteme für die Kraftfahrzeugindustrie geeignet.

Das gezielte Adsorbieren von Gerüchen und Verunreinigungen, die beim Kochen auftreten können, ist mit diesen Filtern allerdings ebenfalls nicht möglich.

Aufgabe der vorliegenden Erfindung ist es daher, eine Lösung zu schaffen mittels derer Gerüche und weitere Verunreinigungen aus einem Luftstrom zuverlässig und gezielt entfernt werden können.

Der Erfindung liegt die Erkenntnis zugrunde, dass zur Lösung dieser Aufgabe Filtermaterial in dem Filterelement verwendet wird, mittels dessen unterschiedliche Adsorptionsvorgänge hervorgerufen werden und das Filtermaterial in geeigneter Weise in dem Filterelement angeordnet wird.

Die Aufgabe wird erfindungsgemäß daher gelöst durch eine Dunstabzugsvorrichtung mit den Merkmalen nach Anspruch 1.

Als Dunstabzugsvorrichtung wird erfindungsgemäß eine Vorrichtung bezeichnet, die eine Dunstabzugshaube umfasst. Diese Art von Dunstabzugsvorrichtung dient insbesondere zur Reinigung von verunreinigter Luft, die in Küchen oberhalb eines Kochfeldes auftritt. Die verunreinigte Luft wird hierbei durch Fettfilter in der Dunstabzugshaube vorgereinigt und zumindest von Fett- und Flüssigkeitspartikeln sowie anderen Schwebstoffen befreit. Allerdings werden durch diese Fettfilter Geruchsstoffe und andere Verunreinigungen nicht oder nur bedingt ausgefiltert. Das erfindungsgemäß verwendete Filterelement stellt einen als Geruchsfilter bezeichneten Filter dar, an dem Geruchsstoffe und weitere Verunreinigungen ausgefiltert werden.

Erfindungsgemäß weist das Filterelement Filtermaterial auf, das zumindest teilweise aus zumindest einem mineralischen Adsorber besteht.

Als mineralische Adsorber werden erfindungsgemäß Materialien bezeichnet, die vorzugsweise natürlich vorkommende Materialen darstellen. Diese Adsorber können je nach Anwendung gegebenenfalls modifiziert sein. Im Gegensatz zu anderen Filtermaterialien, wie beispielsweise Aktivkohle, ist bei diesen mineralischen Adsorbern eine chemische Behandlung vor dem Einsatz als Filtermaterial nicht erforderlich. Dadurch werden die Herstellungskosten verringert. Zudem können mineralische Adsorber einfach entsorgt werden.

Mineralische Adsorber weisen bei dem erfindungsgemäß verwendeten Filterelement aber auch zusätzliche Vorteile auf. Insbesondere können die mineralischen Adsorber zum einen katalytisch für die Adsorption von Geruchsstoffen und anderen Verunreinigungen wirken. Weiterhin sind mineralische Adsorber in der Regel nicht brennbar. Somit können die Sicherheitsanforderungen, die an Haushaltsgeräte gestellt werden, eingehalten werden und der Einsatz des Filtermaterials ist auch in Bereichen hoher Temperatur, wie insbesondere in oder über der Dunstabzugshaube möglich. Schließlich weisen unterschiedliche mineralische Adsorber unterschiedlich ein ausgeprägtes Adsorptionsverhalten für unterschiedliche Verunreinigungen, insbesondere Geruchsstoffe auf. Da bei dem erfindungsgemäß verwendeten Filterelement das Filtermaterial in Lagen angeordnet ist, kann somit in den unterschiedlichen Lagen eine gezielte Abscheidung unterschiedlicher Verunreinigungen, insbesondere Geruchsstoffe, eingestellt werden. Hierdurch kann insbesondere der enormen Anzahl an Möglichkeiten, Nahrungsmittel zuzubereiten Rechnung getragen werden. Einzelne Gerüche können hierbei zuverlässig in den einzelnen Lagen des Filterelementes adsorbiert werden.

Erfindungsgemäß ist das Filtermaterial von zumindest zwei Lagen unterschiedlich zueinander ist. Dies bedeutet insbesondere, dass die Zusammensetzung des Filtermaterials in einer Lage anders ist als in mindestens einer weiteren Lage des Filterelementes. Die Lage oder Lagen des Filterelementes werden im Folgenden auch als Schicht oder Schichten bezeichnet. Die Lagen sind so in dem Filterelement angeordnet, dass diese sich senkrecht zu der Anströmrichtung des Filterelementes erstrecken. Hierbei ist die Zusammensetzung des Filtermaterials zumindest in zueinander benachbarten Lagen unterschiedlich. Hierdurch wird zum einen das gezielte Adsorbieren durch das in der jeweiligen Lage verwendete Filtermaterial gewährleistet. Zudem können durch die Trennung der unterschiedlichen Filtermaterialien in unterschiedlichen Lagen auch konkurrierende Adsorptions- und Desorptionsvorgänge und andere Konkurrenzreaktionen verhindert werden, durch die Gerüche wieder aus dem Filtermaterial verdrängt werden und freigesetzt werden könnten.

Das erfindungsgemäß verwendete Filterelement stellt somit einen mehrlagigen Filter dar. Das Filterelement kann beispielsweise aus drei Lagen bestehen. In der ersten Lage kann beispielsweise eventuell noch in dem Luftstrom vorhandener Wasserdampf gebunden werden, in einer zweiten Lage können beispielweise Kohlenwasserstoffe und in der letzten Lage extrem leichtflüchtige Substanzen, wie beispielsweise Amine, oder feinere Partikel gebunden werden. Durch eine solche sequentielle Adsorption von ansonsten miteinander konkurrierenden Substanzen, die bei dem erfindungsgemäß verwendeten Filterelement realisiert werden kann, kann so die Rückhaltefunktion des Filterelementes insgesamt verbessert werden. Insbesondere kann ein frühzeitiges Zusetzen des Filterelementes verhindert werden.

Mit dem erfindungsgemäß verwendeten Filterelement ist daher durch die Verwendung mineralischer Adsorber und einzelner Filterlagen eine Verbesserung sowohl hinsichtlich der Geruchsbeseitigung als auch der Filterlebensdauer möglich.

Gemäß einer bevorzugten Ausführungsform stellt der der mineralische Adsorber, der zumindest teilweise das Filtermaterial des Filterelementes bildet, ein Schichtsilikat dar.

Es können hierbei Dreischicht-Silikate und/oder Zweischicht-Silikate in modifizierter oder unmodifizierter Form verwendet werden. Die Verwendung von Schichtsilikaten, die auch als Blatt- oder Phyllosilikate bezeichnet werden, ist unter anderem wegen deren hohen spezifischen Oberfläche von Vorteil, da dadurch die wirksame Fläche für die Ablagerung von Verunreinigungen aber auch gegebenenfalls für eine Reaktion mit Gasen, die in dem zu reinigenden Luftstrom enthalten sind, zur Verfügung steht. Schließlich weisen Schichtsilikate eine hohe lonenaustauschkapazität auf. Somit weist das Adsorbermaterial zum einen eine hohe Aufnahmefähigkeit zur Bindung ungewünschte Verunreinigungen, die flüssig oder gasförmig sein können, und zu anderen eine einfache Möglichkeit der Reaktivierung oder Regeneration auf, beispielsweise durch thermische Behandlung. Schichtsilikate sind nicht brennbar, so dass diese unbedenklich sind für den Einsatz als Filtermaterial in einem Filterelement, das oberhalb und damit in der Nähe einer Kochstelle eingesetzt wird. Schließlich kann durch die Verwendung von Schichtsilikaten auch die Standzeit des Filterelementes verlängert werden, da diese ein größeres Aufnahmevolumen für Verunreinigungen als andere Filtermaterialien, wie beispielsweise Aktivkohle, besitzen. Zudem können Schichtsilikate gegen Reaktionen zwischen Verunreinigungen und / oder reaktiver Spezies in dem Filtermaterial resistenter sein.

Gemäß bevorzugter Ausführungsformen stellt der mineralische Adsorber smektithaltige Tonerde, Bentonit oder Halloysit dar.

Als smektithaltige Tonerde und insbesondere smektitreiche Tonerde wird ein quellfähiges Dreischichtsilikat bezeichnet. Beispielsweise werden als Smektite hierbei Montmorillonit, Beidellit und/oder Nontronit verwendet. Bentonit bezeichnet insbesondere eine Tonmineralmischung, die zum Großteil aus Montmorillonit besteht. Halloysit stellt ein Zweischichtsilikat, insbesondere Aluminiumsilikat, dar, das eine vorwiegend röhrförmige Struktur im Mikrometerbereich und kleiner aufweist und in chemischer Hinsicht dem Kaolin ähnlich ist.

Diese bevorzugten mineralischen Adsorber haben sich als besonders geeignet zum Abscheiden von Verunreinigungen und von reaktiven Spezies und als besonders beständig gegen Zersetzung durch diese Ablagerungen oder durch Reaktionen zwischen diesen Ablagerungen erwiesen. Zudem sind diese Adsorber an das breitbandige Anwendungsspektrum von Dunstabzugshauben angepasst.

Erfindungsgemäß stellt das Filtermaterial eine Mischung aus mindestens einem mineralischen Adsorber und Aktivkohle dar.

Die Mischung, die als Filtermaterial verwendet wird, kann somit ausschließlich aus mineralischen Adsorbern oder aber aus einer Mischung von mineralischem Adsorber oder mineralischen Adsorbern und Aktivkohle bestehen. Sind außer den mineralischen Adsorbern auch weitere Materialien, wie insbesondere Aktivkohle in dem Filterelement enthalten, so bildet vorzugsweise der Anteil des mineralischen Adsorbers den größten Anteil. Das heißt das Filtermaterial in dem Filterelement oder zumindest in einer der Lagen des Filterelementes besteht überwiegend aus einem oder mehreren mineralischen Adsorbern. Indem als Filtermaterial eine Mischung verwendet wird, können unterschiedliche Eigenschaften gezielter eingestellt werden. Insbesondere kann das Filtermaterial entsprechend den Substanzen, wie Geruchsstoffen oder reaktiven Spezies gewählt werden, die aus dem Luftstrom beseitigt werden sollen. Bei einer Mischung, in der auch Aktivkohle als Filtermaterial enthalten ist, können zudem Synergieeffekte zwischen den mineralischen Adsorbern und der Aktivkohle genutzt werden.

Erfindungsgemäß ist es aber auch möglich einzelne Lagen oder alle Lagen des Filterelementes jeweils aus ausschließlich einer Art von Adsorber zu bilden. Zudem kann beispielsweise auch eine Lage ausschließlich aus Aktivkohle bestehen. Gemäß einer Ausführungsform weist das Filtermaterial eine Granulatform auf. Es ist aber auch möglich ein Filtermaterial zu verwenden, das beispielsweise in Kornform vorliegt. Besonders bevorzugt weist der beziehungsweise die mineralischen Adsorber eine Granulatform auf. Der Vorteil der Verwendung von Granulaten besteht zum einen darin, das unterschiedliche Adsorber auch einfache Weise miteinander vermischt werden können. Zum anderen weisen Granulate eine große Oberfläche auf, so dass die Adsorptionsfähigkeit der Adsorber effektiv genutzt werden kann. Schließlich lassen sich Granulate auf einfache Weise mischen, so dass die Zusammensetzungen der Lagen des Filterelementes auf einfache Weise eingestellt werden können.

Es liegt auch im Rahmen der Möglichkeiten dass die unterschiedlichen Adsorber in unterschiedlichen Formen, beispielsweise als Granulat oder als Körner vorliegen. Der Vorteil der Verwendung von Granulaten besteht zum einen darin, dass diese leicht miteinander gemischt werden können. Dadurch kann eine Mischung unterschiedlicher Adsorber erzeugt werden und so die Zusammensetzungen des Filtermaterials auf einfache Weise eingestellt werden kann. Zum anderen weisen Granulate eine große äußere Oberfläche auf, so dass die Adsorptionsfähigkeit der Adsorber effektiv genutzt werden kann.

Gemäß einer weiteren Ausführungsform umfasst das Filterelement einen Formkörper aus zumindest einem Teil des Filtermaterials, insbesondere einen Extrusionsformkörper. Vorzugsweise stellt ein Formkörper jeweils eine Lage des Filterelementes dar. Hierdurch kann die Form des Filtermaterials innerhalb einer Lage des Filterelementes den Anforderungen entsprechend gewählt werden und ein Vermischen der Filtermaterialien einzelner Lagen kann verhindert werden. Der Formkörper weist vorzugsweise eine offene Form auf und kann beispielsweise eine Wabenstruktur besitzen, die insbesondere durch Extrusion einfach hergestellt werden kann. Durch eine solche offene Form des Formkörpers werden gezielte Angriffsflächen für die Adsorption gebildet. Zudem ist die Durchlässigkeit eines solchen Formkörper gegenüber der Verwendung einer Matte oder anderen durchgehenden Lage verbessert, so dass der Luftstrom nur geringfügig durch das Filterelement behindert wird. Schließlich kann durch die Verwendung eines Formkörpers aus Filtermaterial in dem Filterelement die Luftführung in dem Filterelement gezielt eingestellt werden. Der Formkörper besteht vorzugsweise zumindest teilweise aus mindestens einem der mineralischen Adsorber.

Ist zusätzlich als Filtermaterial beispielsweise Aktivkohle vorgesehen, kann diese bei dem erfindungsgemäß verwendeten Filterelement mit dem oder den mineralischen Adsorbern vermischt sein. Alternativ ist es aber auch möglich dass die Aktivkohle mit dem mineralische Adsorber oder den mineralischen Adsorbern versetzt ist oder der mineralische Adsorber oder die mineralischen Adsorber mit der Aktivkohle versetzt sind. Als Versetzen wird in diesem Zusammenhang insbesondere eine Verbindung verstanden, bei der die Komponenten vorzugsweise chemisch miteinander verbunden sind. Insbesondere kann beispielsweise der mineralische Adsorber mit Aktivkohle dotiert werden oder umgekehrt. Alternativ kann das Versetzen aber auch ein Beschichten der einen Komponente mit der anderen darstellen. Beispielsweise kann der mineralische Adsorber mit Aktivkohlepulver beschichtet werden. Eine solche Beschichtung kann insbesondere in den Fällen einfach ausgeführt werden, in denen der mineralische Adsorber oder die mineralischen Adsorber in Granulatform oder als Formkörper vorliegen. Auch das Beschichten eines Formkörpers aus Aktivkohle mit einem oder mehreren mineralischen Adsorbern ist erfindungsgemäß möglich.

Ein Vorteil des Versetzens der Komponenten des Filtermaterials miteinander besteht insbesondere darin, dass die konkrete Zusammensetzung des Filtermaterials an bestimmten Stellen des Filterelementes gezielt eingestellt und aufrecht erhalten werden kann. Bei einer reinen Mischung von beispielsweise Granulaten oder Körnern der Komponenten, die erfindungsgemäß auch Möglich ist, kann es beim Transport oder beim Bewegen des Filterelementes zu einer ungewollten Veränderung der Zusammensetzung an unterschiedlichen Stellen kommen. Die Synergieeffekte die durch das gemeinsame Vorsehen von Aktivkohle und mineralischen Adsorbern erzielt werden können, können dadurch gegebenenfalls stellenweise nicht mehr genutzt werden.

Gemäß einer bevorzugten Ausführungsform wird das Filtermaterial in einem Trägerrahmen gehalten. Hierbei kann für alle Lagen des Filterelementes ein einziger Rahmen verwendet werden. Es ist aber auch möglich, dass jede der Lagen des Filterelementes in einem gesonderten Rahmen gehalten wird. Der Trägerrahmen ist so ausgestaltet, dass dieser das Anströmen des Filtermaterials weiterhin ermöglicht. Ist für das Filterelement nur ein Trägerrahmen vorgesehen, so kann zur Trennung der einzelnen Lagen voneinander beispielsweise jeweils ein Gitter oder eine andere Trennvorrichtung verwendet werden.

Dunstabzugsvorrichtungen mit Dunstabzugshaube werden insbesondere zum Absaugen und Reinigen von Dünsten und Wrasen verwendet, die beim Kochen entstehen. Die Dunstabzugshaube ist hierbei oberhalb des Kochfeldes angeordnet. An dieser Einbauposition kommt es während des Kochvorgangs zum Teil zu hohen Temperaturen und bei einigen Kochvorgängen sogar zu einem Flammeneintritt in die Dunstabzugshaube: Durch das erfindungsgemäß verwendete Filtermaterial in Form von zumindest einem mineralischen Adsorber ist aber ein Entzünden des Filtermaterials nicht zu befürchten, da dieses nicht oder nur schwer brennbar ist. Das erfindungsgemäß verwendete Filterelement stellt in der erfindungsgemäßen Dunstabzugsvorrichtung vorzugsweise den Geruchsfilter dar. Dieser kann in der Dunstabzugshaube oder nach der Dunstabzugshaube angeordnet sein.

Gemäß einer Ausführungsform weist die Dunstabzugsvorrichtung eine Luftaufbereitungsvorrichtung auf, in der das Filterelement vorgesehen ist.

Als Luftaufbereitungsvorrichtung wird hierbei eine Vorrichtung bezeichnet, die zumindest eine Aktivierungsvorrichtung aufweist, mittels derer der zu reinigende Luftstrom mit hohen Energien behandelt werden kann. Hierzu können beispielsweise Plasmaquellen verwendet werden. Bei einer solchen Aufbereitung von Luft kommt es neben der Ionisation und / oder Dissoziation auch zur Bildung von reaktiven Spezies, wie beispielsweise Ozon. Wird ein Filterelement gemäß der vorliegenden Erfindung eingesetzt und insbesondere an der Luftaufbereitungsvorrichtung vorgesehen, so können neben den Geruchsstoffen auch diese reaktiven Spezies zuverlässig ausgefiltert werden. Hierzu kann in zumindest einer der Lagen des Filterelementes ein Adsorber verwendet werden, der insbesondere für das Anbinden der reaktiven Spezies geeignet ist.

Indem das erfindungsgemäß verwendete Filterelement an der Luftaufbereitungsvorrichtung vorgesehen ist, kann ein gezieltes Ausfiltern von noch in dem Luftstrom enthaltenen Geruchstoffen und / oder reaktiven Spezies gewährleistet werden.

Es liegt allerdings auch im Rahmen der vorliegenden Erfindung, dass das erfindungsgemäß verwendete Filterelement in oder an der Dunstabzugshaube beispielsweise unmittelbar nach dem Gebläse oder Lüfter der Dunstabzugshaube eingesetzt wird. In diesem Fall, in dem keine gesonderte Luftaufbereitungsvorrichtung vorgesehen ist, dient das Filterelement dann ausschließlich zum Ausfiltern von Geruchsstoffen.

Ist eine Luftaufbereitungsvorrichtung vorgesehen, so ist diese bei der erfindungsgemäßen Dunstabzugsvorrichtung vorzugsweise so angeordnet, dass diese einem Fettfilter der Dunstabzugshaube in Strömungsrichtung der Luft nachgeschaltet ist. Dies bedeutet, dass die in die Luftaufbereitungsvorrichtung eintretende Luft im Wesentlichen von festen Verunreinigungen, insbesondere Schwebteilchen, und auch flüssigen Verunreinigungen, wie Wasser- und Fetttropfen, bereits befreit ist. Hierdurch kann ein Zusetzen des erfindungsgemäß verwendeten Filterelementes mit diesen Verunreinigungen verhindert werden. Gemäß einer bevorzugten Ausführungsform ist die Luftaufbereitungsvorrichtung so angeordnet, dass diese nicht nur dem Fettfilter der Dunstabzugshaube sondern auch dem Gebläse der Dunstabzugshaube in Strömungsrichtung der Luft nachgeschaltet ist. Durch diese Anordnung der Luftaufbereitungsvorrichtung wird verhindert, dass das Gebläse mit höherer Leistung betrieben werden muss.

Die Luftaufbereitungsvorrichtung kann in der Dunstabzugshaube integriert sein. Beispielsweise kann die Luftaufbereitungsvorrichtung in einer Verkleidung oder Verblendung der Dunstabzugshaube, wie beispielsweise einem Kanal oder Kamin, angeordnet sein.

Gemäß einer Ausführungsform ist die Luftaufbereitungsvorrichtung zu der Dunstabzugshaube separat angeordnet und mit der Dunstabzugshaube über eine Luftleitung verbunden. Durch eine separate Anordnung der Luftaufbereitungsvorrichtung kann eine Reihe von Vorteilen erzielt werden. Zum ist die Luftaufbereitungsvorrichtung bei dieser Anordnung für den Benutzer zugänglich ohne eine Verkleidung oder andere Teile der Dunstabzugshaube entfernen zu müssen. Diese Zugänglichkeit ist beispielsweise zum Wechseln des Filterelementes notwendig.

Nicht erfindungsgemäß ist in der Luftaufbereitungsvorrichtung ein Luftbehandlungsraum vorgesehen. Dieser Luftbehandlungsraum stellt einen freien, das heißt nicht mit Material gefüllten Raum dar. Hierdurch wird es möglich in dem Raum die für die aktive Luftbehandlung erforderlichen Reaktionen ablaufen zu lassen und eine gute Verteilung der zu behandelnden Luft zu gewährleisten. Zudem kann auch eine gute Durchmischung mit reaktiven Spezies, die zur aktiven Behandlung eventuell erzeugt werden, erfolgen. Diese Vorteile sind bei einem mit Filtermaterial ausgefüllten Luftbehandlungsort nicht möglich.

Der Luftbehandlungsraum ist zumindest bereichsweise durch zumindest eines der Filterelemente begrenzt. Durch diese Ausgestaltung des Luftbehandlungsraums können zum einen die genannten, durch den freien Raum gegebenen Vorteile erzielt werden. Zudem kann durch das Vorsehen des Filterelementes eine passive Filterung nach oder gleichzeitig mit der aktiven Luftbehandlung erfolgen. Die Luft, die durch die aktive Luftbehandlung bereits zumindest teilweise von Verunreinigungen, insbesondere von Geruchsstoffen, befreit wurde, kann durch das Hindurchtreten durch das Filterelement von noch verbleibenden Verunreinigungen befreit werden. Hierbei können sowohl originäre Verunreinigungen als auch gegebenenfalls reaktive Spezies, die erst bei der aktiven Luftbehandlung erzeugt wurden und noch in der Luft vorhanden sind, entfernt werden. Da das Befreien der Luft von Verunreinigungen insbesondere an der Oberfläche des Filterelementes erfolgt, hat die erfindungsgemäße Anordnung des Filterelementes weitere Vorteile. Insbesondere, kann die von der verunreinigten Luft angeströmte Filteroberfläche maximiert werden. Diese Maximierung kann insbesondere bei einem Luftbehandlungsraum, der an mehr als einer Seite, vorzugsweise an allen Seiten, durch Filterelemente begrenzt ist, erreicht werden. Das Filterelement oder die Filterelemente stellen vorzugsweise die Begrenzungswand oder Begrenzungswände der Luftaufbereitungsvorrichtung zu der Umgebung dar.

Mineralische Adsorber weisen bei dem erfindungsgemäß verwendeten Filterelement aber auch zusätzliche Vorteile auf. Durch die Verwendung dieses Filtermaterials kann die Kombination zwischen aktiver und passiver Luftbehandlung nämlich optimiert werden. Insbesondere können die mineralischen Adsorber zum einen katalytisch für die Adsorption on Geruchsstoffen und anderen Verunreinigungen wirken. Weiterhin werden aber durch mineralische Adsorber auch zuverlässig Reaktionsprodukte, insbesondere reaktive Spezies, wie beispielsweise Ozon, aus der Luft, die durch das Filterelement mit mineralischen Adsorbern als Filtermaterial strömt, ausgefiltert. Schließlich sind mineralische Adsorber in der Regel nicht brennbar. Somit können die Sicherheitsanforderungen, die an Haushaltsgeräte gestellt werden, eingehalten werden und der Einsatz des Filtermaterials ist auch in Bereichen hoher Temperatur, wie insbesondere über einer Dunstabzugshaube möglich.

Weiterhin können durch die separate Anordnung der Luftaufbereitungsvorrichtung deren Abmessungen unabhängig von der Größe der Dunstabzugshaube gewählt werden. Der Luftbehandlungsraum und damit auch die Größe des Filterelementes kann daher bei dieser Anordnung groß sein und somit kann eine zuverlässige Aufbereitung des Luftstroms gewährleistet werden.

Gemäß einer bevorzugten Ausführungsform stellt die Dunstabzugsvorrichtung eine Umluftvorrichtung dar. Als Umluftvorrichtung wird hierbei eine Vorrichtung bezeichnet, bei der die in der Dunstabzugsvorrichtung behandelte Luft nach der Behandlung zumindest teilweise wieder in den Raum geführt wird, in dem die Dunstabzugsvorrichtung betrieben wird. Dieser Raum ist in der Regel eine Küche.

Die Erfindung wird im Folgenden erneut unter Bezugnahme auf die beiliegenden Zeichnungen erläutert. Hierbei zeigen:
Figur 1: eine schematische, perspektivische Ansicht einer Ausführungsform der erfindungsgemäßen Dunstabzugsvorrichtung;
Figur 2: eine schematische, perspektivische Schnittansicht einer Ausführungsform einer Luftaufbereitungsvorrichtung der erfindungsgemäßen Dunstabzugsvorrichtung; und
Figur 3: eine schematische Schnittansicht einer Ausführungsform eines erfindungsgemäß verwendeten Filterelementes.

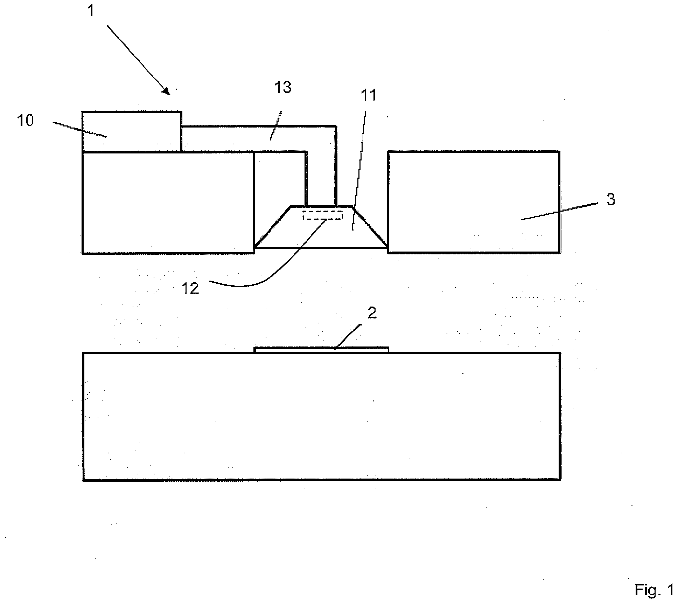

In Figur 1 ist eine Ausführungsform der erfindungsgemäßen Dunstabzugsvorrichtung schematisch gezeigt.

In Figur 1 ist eine schematische Ansicht einer Küchenzeile gezeigt. Ein Kochfeld 2 ist in den Unterschränken der Kochzeile vorgesehen. Oberhalb des Kochfeldes 2, das einen Herd oder dergleichen darstellen kann, ist eine Ausführungsform der erfindungsgemäßen Dunstabzugsvorrichtung 1 gezeigt. Die Dunstabzugsvorrichtung 1 umfasst eine Dunstabzugshaube 11. In der Dunstabzugshaube 11 ist ein Lüfter (nicht gezeigt) vorgesehen, über den Dünste und Wrasen, die von dem Kochfeld 2 aufsteigen, angesaugt werden. In der Dunstabzugshaube 11 werden die Dünste und Wrasen über Filter, insbesondere Fettfilter (nicht gezeigt), von Fett- und Flüssigkeitspartikeln befreit. Von der Dunstabzugshaube 11 erstreckt sich nach oben eine Luftleitung 13 in Form eines Luftrohres. Die in der Dunstabzugshaube 11 vorgereinigte Luft, die immer noch eine gewisse Menge an Verunreinigungen, insbesondere Geruchsstoffe, in sich trägt, wird über die Verrohrung oder Luftleitung 13 zu einer Luftaufbereitungsvorrichtung 10 geleitet. Die Luftaufbereitungsvorrichtung 10 ist in der dargestellten Ausführungsform auf einem Oberschrank 3 der Küchenzeile angeordnet. Die Anordnung der Luftaufbereitungsvorrichtung 10 ist aber nicht auf diese Position beschränkt. Die Luftaufbereitungsvorrichtung 10 kann auch unmittelbar oberhalb der Dunstabzugshaube 11 oder in dem Gehäuse der Dunstabzugshaube 11 vorgesehen sein.

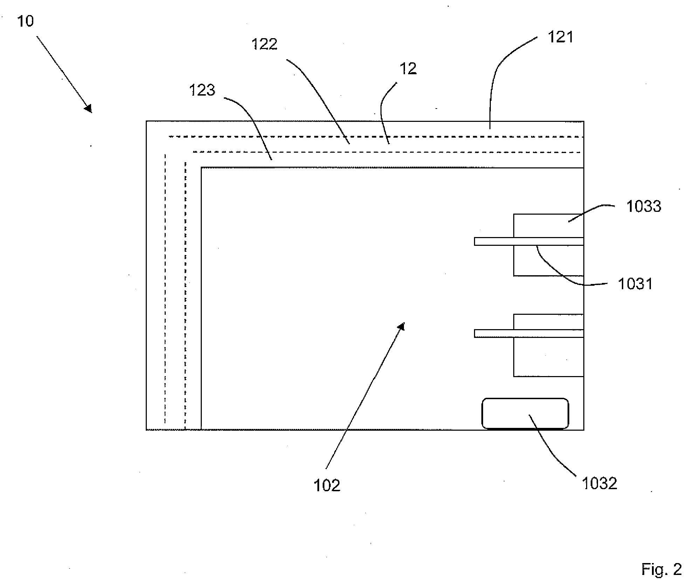

In Figur 2 ist der Innenraum einer Ausführungsform der erfindungsgemäßen Luftaufbereitungsvorrichtung 10 schematisch gezeigt. Die Luftaufbereitungsvorrichtung 10 weist ein kastenförmiges Gehäuse auf. Wie in Figur 2 gezeigt, ist an der Oberseite und Vorderseite der Luftaufbereitungsvorrichtung 10 ein Filterelement 12 vorgesehen. Die Rückseite, der Boden, die Stirnseiten sowie die Oberseite und die Vorderseite des Gehäuses der Luftaufbereitungsvorrichtung 10 begrenzen den Luftbehandlungsraum 102.

Im diesem Luftbehandlungsraum 102, das heißt im Inneren der Luftaufbereitungsvorrichtung 10, sind Aktivierungsvorrichtungen 103 zur aktiven Luftbehandlung angeordnet. In der dargestellten Ausführungsform sind als Aktivierungsvorrichtungen 103 plattenförmige Elektroden 1031 vorgesehen, die zur Erzeugung von Energie mittels dielektrisch behinderten Entladung dienen. Weiterhin ist eine Plasmaquelle 1032 angedeutet, die alternativ oder zusätzlich vorgesehen sein kann. Weiterhin sind in der Figur 2 auch elektronische oder elektrische Bauteile 1033 angedeutet, die in dem Luftbehandlungsraum 102 zum Betrieb der Aktivierungsvorrichtungen 103 vorgesehen sein können.

Wie sich aus Figur 2 ergibt, ist in der dargestellten Ausführungsform an der Vorderseite und der Oberseite des Luftbehandlungsraums 102 ein erfindungsgemäß verwendetes Filterelement 12 vorgesehen. Das Filterelement 12 kann einteilig, also L-förmig ausgestaltet sein. Es liegt aber auch im Rahmen der Erfindung an der Oberseite und der Vorderseite ein oder mehrere getrennte Filterelemente 102 vorzusehen. Auch können weitere Seiten der Luftaufbereitungsvorrichtung 1 und insbesondere des Luftbehandlungsraums 102 zumindest teilweise mit einem oder mehreren Filterelementen 12 abgedeckt sein.

In dem Luftbehandlungsraum 102 wird die noch mit Geruchsstoffen und gegebenenfalls weiteren Verunreinigungen beladene Luft, die über die Luftleitung 13 von der Dunstabzugshaube 11 zu der Luftaufbereitungsvorrichtung 10 geleitet wird, behandelt. Hierbei werden zum Teil auch reaktive Spezies, wie Ozon, freigesetzt. Die so nachbehandelte Luft tritt dann über das Filterelement 12 aus der Luftaufbereitungsvorrichtung 10 aus. Hierbei werden in dem Filterelement 12 noch nicht beseitigte Geruchsstoffe und andere Verunreinigungen, wie beispielsweise Feuchtigkeit, ausgefiltert. Da in dem Filterelement 12 als Filtermaterial zumindest teilweise mineralische Adsorber enthalten sind, werden die Geruchsstoffe und andere Verunreinigungen sowie auch gegebenenfalls gebildete reaktive Spezies in dem Filterelement 12 zurückgehalten und die Luft kann in gereinigter Form in die Umgebung abgegeben werden. Insbesondere kann die Luft ohne Bedenken in den Raum, in dem die Luftaufbereitungsvorrichtung 10 betrieben wird, im vorliegenden Fall die Küche, abgegeben werden.

Das Filterelement 12 ist, wie in Figur 2 schematisch angedeutet ist, mehrlagig ausgestaltet sein. Hierbei variiert die Zusammensetzung des Filtermaterials bei dem mehrlagigen Aufbau von einer Schicht zur anderen. So kann beispielsweise in der Schicht 121, die dem Luftbehandlungsraum 102 zugewandt ist, ein Filtermaterial vorgesehen sein, das insbesondere zur Aufnahme von Feuchtigkeit ausgelegt ist. In der weiteren Schicht 122 oder den weiteren Schichten 122, 123 kann dann Filtermaterial verwendet werden, das insbesondere zur Aufnahme von Geruchsstoffen geeignet ist. Auch bei dieser mehrlagigen Ausgestaltung ist in zumindest einer, vorzugsweise aber in allen Schichten als Filtermaterial zumindest teilweise ein mineralischer Adsorber vorgesehen.

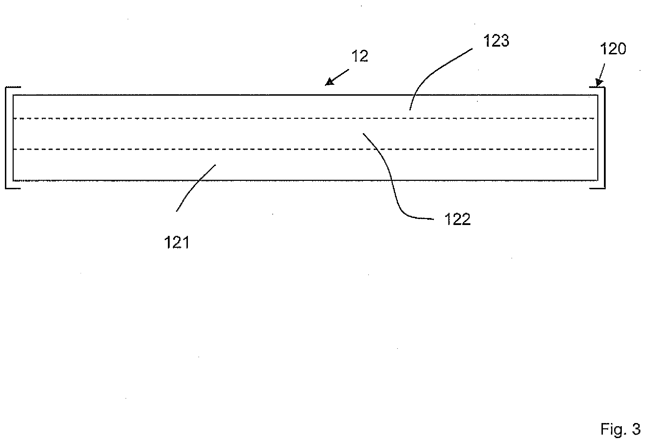

In Figur 3 ist schließlich eine schematische Schnittansicht einer weiteren Ausführungsform eines erfindungsgemäß verwendeten Filterelementes 12 gezeigt. Bei dieser Ausführungsform stellt das Filterelement 12 ein flächiges Filterelement 12, dar, in dem drei Lagen 121, 122, 123 oder Schichten von Filtermaterial vorgesehen sind. Diese Lagen 121, 122, 123 sind in der dargestellten Ausführungsform in einem Trägerrahmen 120 gehalten, der einen umlaufenden Rahmen darstellen kann. Ein solches flächiges Filterelement 12 kann beispielsweise, wie in Figur 1 angedeutet, in der Dunstabzugshaube 11 der Dunstabzugsvorrichtung 1 angeordnet sein. In diesem Fall kann die Dunstabzugsvorrichtung 1 auch ohne die dargestellte Luftaufbereitungsvorrichtung 10 ausgestaltet sein.

Mit der vorliegenden Erfindung wird alternativ zu der einfachen Reinigung von Luft durch Aktivkohlefilter eine Lösung vorgeschlagen bei der Filter basierend auf mineralischen Adsorbern, beispielsweise smektitreichen Tonerden, Bentoniten oder Halloysiten, verwendet werden. Diese Substanzen zeichnen sich durch ihre positiven Adsportionseigenschaften aus. Sowohl Gerüche als auch reaktive Substanzen wie Ozon können durch diese Adsorber zurückgehalten werden. Katalytische Eigenschaften der Mineraladsorber werden bei der vorliegenden Erfindung genutzt. Zudem kann auch eine Kombination von Aktivkohle und mineralischem Adsorber in dem mehrlagigen Filter bei der vorliegenden Erfindung Verwendung finden.

Die vorliegende Erfindung weist eine Reihe von Vorteilen auf. Insbesondere weisen mineralische Adsorber den Vorteil auf, dass sie im Gegensatz zu Aktivkohle nicht brennbar sind. Des Weiteren kann abhängig von der jeweiligen Substanz, die aus dem Luftstrom beseitigt werden soll, ein besseres Rückhaltevermögen erzielt werden. Außerdem ist eine Erhöhung der Filterstandzeit möglich. Die Sicherheit der Luftreinigungsvorrichtung kann insgesamt erhöht werden. Durch eine Kombination von Aktivkohle und mineralischem Adsorber / mineralischen Adsorbern können eventuell auftretende Synergieeffekte genutzt werden. In dem mehrlagigen Filterelement können beispielsweise einzelne Stoffgruppen gezielt voneinander getrennt aus dem Luftstrom entfernt werden. Daraus resultiert auch eine erhöhte Standzeit des Gesamtfilters.

### Bezugszeichenliste

- 1: Dunstabzugsvorrichtung
- 10: Luftaufbereitungsvorrichtung
- 102: Luftbehandlungsraum
- 103: Aktivierungsvorrichtung
- 1031: Elektrode
- 1032: Plasmaquelle
- 1033: elektrische/elektronische Bauteile
- 11: Dunstabzugshaube
- 12: Filterelement
- 120: Trägerrahmen
- 121: Lage
- 122: Lage
- 123: Lage
- 13: Luftleitung

- 2: Kochfeld
- 3: Oberschrank

## Patentansprüche

1. Dunstabzugsvorrichtung mit einer Dunstabzugshaube, wobei die Dunstabzugsvorrichtung zumindest ein Filterelement aufweist und das Filterelement (12) Filtermaterial aufweist, **dadurch gekennzeichnet, dass** das Filtermaterial in Lagen (121, 122, 123) in dem Filterelement (12) vorliegt, wobei die Zusammensetzung des Filtermaterials in einer Lage anders als in mindestens einer weiteren Lage des Filterelementes ist, das Filtermaterial eine Mischung aus einem mineralischen Absorber und einem weiteren mineralischen Adsorber oder aus mindestens einem mineralischen Adsorber und Aktivkohle darstellt und das Filtermaterial in zumindest einer Lage des Filterelementes überwiegend aus einem oder mehreren mineralischen Adsorbern besteht.

2. Dunstabzugsvorrichtung nach Anspruch 1, **dadurch gekennzeichnet, dass** das der mineralische Adsorber zumindest teilweise ein Schichtsilikat darstellt.

3. Dunstabzugsvorrichtung nach einem der Ansprüche 1 oder 2, **dadurch gekennzeichnet, dass** der mineralische Adsorber smektithaltige Tonerde, Bentonit oder Halloysit darstellt.

4. Dunstabzugsvorrichtung nach einem der Ansprüche 1 bis 3, **dadurch gekennzeichnet, dass** das Filtermaterial eine Granulatform aufweist.

5. Dunstabzugsvorrichtung nach einem der Ansprüche 1 bis 4, **dadurch gekennzeichnet, dass** das Filterelement (12) einen Formkörper aus zumindest einem Teil des Filtermaterials, insbesondere einen Extrusionsformkörper, umfasst.

6. Dunstabzugsvorrichtung nach einem der Ansprüche 1 bis 5, **dadurch gekennzeichnet, dass** das Filtermaterial in einem Trägerrahmen (120) gehalten wird.

7. Dunstabzugsvorrichtung nach einem der Ansprüche 1 bis 6, **dadurch gekennzeichnet, dass** diese eine Luftaufbereitungsvorrichtung (10) aufweist, in der das Filterelement (12) vorgesehen ist.

8. Dunstabzugsvorrichtung nach Anspruch 7, **dadurch gekennzeichnet, dass** die Luftaufbereitungsvorrichtung (10) zu einer Dunstabzugshaube (11) der Dunstabzugsvorrichtung (1) getrennt angeordnet und in Strömungsrichtung nach der Dunstabzugshaube (11) angeordnet ist.

## Claims

1. Steam extractor device with a steam extractor hood, wherein the steam extractor device has at least one filter element and the filter element (12) has filter material, **characterised in that** the filter material is present in the filter element (12) in layers (121, 122, 123), wherein the composition of the filter material in one layer differs from that in at least one further layer of the filter element, the filter material represents a mixture of a mineral adsorber and a further mineral adsorber or at least one mineral adsorber and active carbon and the filter material consists predominantly of one or more mineral adsorbers in at least one layer of the filter element.

2. Steam extractor device according to claim 1, **characterised in that** the mineral adsorber represents a sheet silicate at least partially.

3. Steam extractor device according to one of claims 1 or 2, **characterised in that** the mineral adsorber represents aluminium oxide containing smectite, bentonite or halloysite.

4. Steam extractor device according to one of claims 1 to 3, **characterised in that** the filter material has a granular form.

5. Steam extractor device according to one of claims 1 to 4, **characterised in that** the filter element (12) comprises a mould comprising at least one part of the filter material, in particular an extrusion mould.

6. Steam extractor device according to one of claims 1 to 5, **characterised in that** the filter material is held in a support frame (120).

7. Steam extractor device according to one of claims 1 to 6, **characterised in that** this has an air preparation device (10), in which the filter element (12) is provided.

8. Steam extractor device according to claim 7, **characterised in that** the air preparation device (10) is arranged separately from a steam extractor hood (11) of the steam extractor device (1) and is arranged in the flow direction downstream of the steam extractor hood (11).

## Revendications

1. Dispositif d'aspiration avec une hotte aspirante, dans lequel le dispositif d'aspiration présente au moins un élément filtrant et l'élément filtrant (12) présente un matériau filtrant, **caractérisé en ce que** le matériau filtrant se trouve en couches (121, 122, 123) dans l'élément filtrant (12), dans lequel la composition du matériau filtrant dans une couche est différente de celle dans au moins une autre couche de l'élément filtrant, le matériau filtrant représente un mélange d'un absorbant minéral et d'un autre adsorbant minéral ou d'au moins un adsorbant minéral et de charbon actif et le matériau filtrant se compose dans au moins une couche de l'élément filtrant essentiellement d'un ou de plusieurs adsorbeurs minéraux.

2. Dispositif d'aspiration selon la revendication 1, **caractérisé en ce que** l'adsorbant minéral représente au moins en partie un silicate en feuillets.

3. Dispositif d'aspiration selon l'une des revendications 1 ou 2, **caractérisé en ce que** l'adsorbant minéral représente de l'alumine, de la bentonite ou de l'halloysite contenant de la smectite.

4. Dispositif d'aspiration selon l'une des revendications 1 à 3, **caractérisé en ce que** le matériau filtrant présente une forme granulaire.

5. Dispositif d'aspiration selon l'une des revendications 1 à 4, **caractérisé en ce que** l'élément filtrant (12) englobe un corps moulé composé d'au moins une partie du matériau filtrant, en particulier un corps moulé par extrusion.

6. Dispositif d'aspiration selon l'une des revendications 1 à 5, **caractérisé en ce que** le matériau filtrant est maintenu dans un cadre de support (120).

7. Dispositif d'aspiration selon l'une des revendications 1 à 6, **caractérisé en ce que** celui-ci présente un dispositif de traitement de l'air (10) dans lequel l'élément filtrant (12) est prévu.

8. Dispositif d'aspiration selon la revendication 7, **caractérisé en ce que** le dispositif de traitement de l'air (10) est disposé séparément d'une hotte aspirante (11) du dispositif d'aspiration (1) et, dans le sens d'écoulement, après la hotte aspirante (11).
